(19) Europäisches Patentamt / European Patent Office / Office européen des brevets

(11) **EP 3 106 864 B1**

(12) **FASCICULE DE BREVET EUROPEEN**

(45) Date de publication et mention de la délivrance du brevet:
**25.07.2018 Bulletin 2018/30**

(51) Int Cl.:
***G01N 23/087*** *(2018.01)*

(21) Numéro de dépôt: **16174221.8**

(22) Date de dépôt: **13.06.2016**

(54) **CARACTERISATION D'UN ECHANTILLON PAR REPRESENTATION EN BASE DE MATERIAUX**

CHARAKTERISIERUNG EINER PROBE DURCH DARSTELLUNG IN EINER MATERIALIENBASIS

CHARACTERISATION OF A SAMPLE BY REPRESENTATION IN A BASIS OF MATERIALS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.06.2015 FR 1555438**

(43) Date de publication de la demande:
**21.12.2016 Bulletin 2016/51**

(73) Titulaire: **Commissariat à l'Énergie Atomique et aux Énergies Alternatives 75015 Paris (FR)**

(72) Inventeurs:
- **BRAMBILLA, Andréa 38113 VEUREY-VOROIZE (FR)**
- **GORECKI, Alexia 38000 GRENOBLE (FR)**
- **POTOP, Alexandra 75014 Paris (FR)**

(74) Mandataire: **Brevalex 56, Boulevard de l'Embouchure B.P. 27519 31075 Toulouse Cedex 2 (FR)**

(56) Documents cités:
**US-A1- 2010 202 584**

- **Alexandra-Iulia Potop: "Imagerie par rayons X résolue en énergie : méthodes de décomposition en base de matériaux adaptées à des détecteurs spectrométriques" In: "Imagerie par rayons X résolue en énergie : méthodes de décomposition en base de matériaux adaptées à des détecteurs spectrométriques", 2 octobre 2014 (2014-10-02), L'Institut National des Sciences Appliquées de Lyon, Lyon, FR, XP055252938, * page 64 - page 65 * * Chapitres 5, 6 * * ***
- **ZHANG RUOQIAO ET AL: "Model-Based Iterative Reconstruction for Dual-Energy X-Ray CT Using a Joint Quadratic Likelihood Model", IEEE TRANSACTIONS ON MEDICAL IMAGING, IEEE SERVICE CENTER, PISCATAWAY, NJ, US, vol. 33, no. 1, 17 septembre 2013 (2013-09-17), pages 117-134, XP011536086, ISSN: 0278-0062, DOI: 10.1109/TMI.2013.2282370 [extrait le 2013-12-27]**

**EP 3 106 864 B1**

**Description**

**DOMAINE TECHNIQUE**

La présente invention concerne le domaine de la caractérisation d'un échantillon par spectrométrie X (longueur d'onde inférieure à $10^{-8}$ m) et/ou gamma (longueur d'onde inférieure à $10^{-11}$ m). L'invention concerne plus particulièrement une détermination d'une série d'épaisseurs caractéristiques, chacune associée à un matériau de calibrage. On parle communément de décomposition en base de matériaux.

**ÉTAT DE LA TECHNIQUE ANTÉRIEURE**

On connaît dans l'art antérieur différentes solutions pour caractériser un échantillon, en particulier par spectrométrie X et/ou gamma.

On a pu montrer en particulier que pour des échantillons présentant un numéro atomique effectif moyen assez faible, la fonction d'atténuation de l'échantillon $L * \mu(E)$ peut être décrite, de façon théorique, comme une combinaison linéaire des coefficients d'atténuation respectifs $\mu_{MAT1}, \mu_{MAT2}$ de deux matériaux de calibrage $MAT1$ et $MAT2$. Autrement dit, l'échantillon d'épaisseur $L$ produit la même atténuation qu'une épaisseur $L_1^{ech}$ du matériau $MAT1$ plus une épaisseur $L_2^{ech}$ du matériau $MAT2$ :

$$\mu_{MAT1}(E) * L_1^{ech} + \mu_{MAT2}(E) * L_2^{ech} = L * \mu(E) \qquad (1)$$

Les matériaux $MAT1$ et $MAT2$ sont dits de calibrage, car leurs coefficients d'atténuation respectifs définissent une base de décomposition pour caractériser l'échantillon. Les épaisseurs $L_1^{ech}$ et $L_2^{ech}$ sont dites caractéristiques, car elles caractérisent l'échantillon dans la base de décomposition. La fonction d'atténuation est le produit d'une épaisseur d'un matériau par son coefficient d'atténuation. Chaque coefficient d'atténuation est une fonction de l'énergie. La fonction d'atténuation est considérée sur une pluralité de canaux d'énergie (également nommés bandes d'énergies, ou intervalles d'énergies).

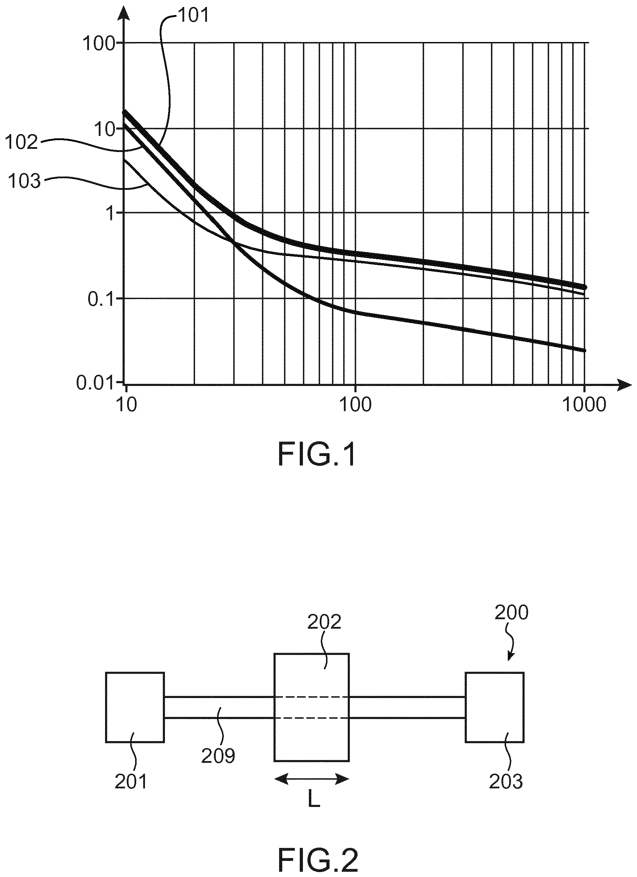

La figure 1 illustre cette propriété. Il s'agit d'un graphique représentant en abscisse l'énergie en kilo-électron-volt (keV) selon une échelle logarithmique, et en ordonnée la valeur de la fonction d'atténuation selon une échelle logarithmique (sans unité). La courbe 101 représente la fonction d'atténuation $\mu_{ECH}(E) * L$ d'un échantillon de polytétrafluoroéthylène d'épaisseur 10 mm. La courbe 102 représente la fonction d'atténuation $\mu_{MAT1}(E) * L_1^{ech}$ d'un échantillon de graphite d'épaisseur 1,49 mm. La courbe 103 représente la fonction d'atténuation $\mu_{MAT2}(E) * L_2^{ech}$ d'un échantillon d'aluminium d'épaisseur 7,66 mm. La somme des courbes 102 et 103 correspond à la courbe 101, de sorte que l'on peut définir l'échantillon par $L_1^{ech} =$ 1,49 mm et $L_2^{ech} = 7,66$ mm, les matériaux de calibrage étant le graphite et l'aluminium. Les différentes fonctions d'atténuation sont dites linéaires, car elles ne présentent pas de discontinuité (k-edge).

En pratique, la fonction d'atténuation de l'échantillon est mesurée grâce au dispositif 200 tel que représenté en figure 2. Le dispositif 200 comprend une source de rayonnement électromagnétique 201, émettant un faisceau d'analyse 209 dans la bande spectrale X et/ou gamma. Le dispositif 200 comprend également un détecteur 203 adapté à compter un nombre de photons reçus, pour chaque canal d'énergie parmi une pluralité. La source 201 et le détecteur 203 forment ensemble un spectromètre. L'échantillon 202, d'épaisseur $L$, est disposé entre la source 201 et le détecteur 203, et est traversé par le faisceau d'analyse 209. Le faisceau d'analyse 209 est atténué en traversant l'échantillon selon la loi de Beer-Lambert :

$$S_{ECH}(E) = S_0(E) \exp(-\mu_{ECH} * L) \qquad (2)$$

$S_0(E)$ est le spectre d'énergie mesuré en l'absence de l'échantillon, et $S_{ECH}(E)$ est le spectre d'énergie mesuré en présence de l'échantillon, dit spectre transmis de l'échantillon.

La fonction d'atténuation de l'échantillon est alors définie par :

$$\mu_{ECH} * L = -ln\left(\frac{S_{ECH}(E)}{S_0(E)}\right) \qquad (3)$$

En théorie, on mesure la fonction d'atténuation de l'échantillon, puis la fonction d'atténuation d'une épaisseur $L_1$ du matériau de calibrage *MAT1* (dite première fonction d'atténuation) et la fonction d'atténuation d'une épaisseur $L_2$ du matériau de calibrage *MAT2* (dite deuxième fonction d'atténuation). Ensuite, on recherche les coefficients *a* et *b* attribués aux première et deuxième fonctions d'atténuation pour définir la fonction d'atténuation de l'échantillon comme une combinaison linéaire des première et deuxième fonctions d'atténuation. On en déduit $L_1^{ech}$ et $L_2^{ech}$, ou plus exactement les estimations de ces longueurs, $\hat{L}_1^{ech}$ et $\hat{L}_2^{ech}$.

En pratique, la mesure des spectres d'énergie est entachée d'erreurs. Ces erreurs proviennent notamment du bruit photonique (fluctuation statistique du nombre de photons qui interagissent dans le spectromètre), de la largeur des canaux d'énergie détectés par le spectromètre, du bruit électronique et autres imperfections du spectromètre. Ces erreurs se retrouvent dans la fonction d'atténuation mesurée de l'échantillon, et dans les première et deuxième fonctions d'atténuation. Ces erreurs affectent la linéarité de la relation exprimée à l'équation (1), et empêchent d'estimer les épaisseurs caractéristiques $L_1^{ech}$ et $L_2^{ech}$ comme décrit ci-dessus.

Une solution connue consiste à modéliser la chaîne de détection par une fonction de réponse du système, pour s'affranchir des erreurs apportées par celle-ci en inversant la fonction du système. Un inconvénient de cette solution est qu'elle est tributaire de la qualité de ladite modélisation, une modélisation de haute qualité étant difficile à obtenir.

Le document US 8,929,508 propose une formule analytique fournissant directement une estimation des épaisseurs caractéristiques $L_1^{ech}$ et $L_2^{ech}$, en faisant l'hypothèse que la relation (1) est linéaire sur chacun parmi une pluralité de petits intervalles d'épaisseurs et de spectres transmis. Une telle hypothèse ne permet cependant pas d'offrir une estimation suffisamment précise des épaisseurs caractéristiques, d'autant plus qu'elle repose sur l'hypothèse selon laquelle l'atténuation par l'échantillon dans chaque canal d'énergie suit une loi gaussienne, alors qu'une loi de Poisson est l'hypothèse la plus réaliste.

Des procédés de décomposition d'un spectre RX d'un échantillon dans une base de matériaux de référence en utilisant une méthode de maximum de vraisemblance sont connus du document US 2010/0202584 A1, du mémoire de thèse "Imagerie par rayons X résolue en énergie : méthodes de décomposition en base de matériaux adaptées à des détecteurs spectrométriques" par Alexandra-Iulia Potop, soutenue le 2 octobre 2014, INSA Lyon et de l'article de Zhang, Ruoqiao et al. "Model-Based Iterative Reconstruction for Dual-Energy X-Ray CT Using a Joint Quadratic Likelihood Model", IEEE Transactions on Médical Imaging, 33(1), 2014. Un objectif de la présente invention est de proposer un procédé et un dispositif offrant une estimation précise des épaisseurs caractéristiques utilisées pour caractériser un échantillon dans une base de matériaux de calibrage.

## EXPOSÉ DE L'INVENTION

Cet objectif est atteint avec un procédé de caractérisation d'un échantillon, par estimation d'une pluralité d'épaisseurs dites caractéristiques, chacune associée à un matériau dit de calibrage. Le procédé selon l'invention comprend les étapes suivantes :

- acquisition d'un spectre d'énergie, dit spectre transmis de l'échantillon, ledit spectre étant défini par un nombre de photons transmis au travers de l'échantillon dans chaque canal d'une pluralité de canaux d'énergie situés dans une bande spectrale X et/ou gamma ;
- pour chaque spectre parmi une pluralité de spectres d'énergie dits de calibrage, calcul de la valeur d'une fonction de vraisemblance à partir dudit spectre de calibrage et du spectre transmis de l'échantillon, chaque spectre de calibrage correspondant au spectre transmis d'un empilement de cales, chaque cale étant formée d'une épaisseur connue de matériau de calibrage ;
- détermination des estimations des épaisseurs caractéristiques associées à l'échantillon, à partir desdites valeurs d'une fonction de vraisemblance et selon le critère de maximum de vraisemblance.

On s'affranchit ainsi des limitations associées aux erreurs de mesures existant dans l'art antérieur décrit en introduction.

On peut estimer des épaisseurs caractéristiques de matériaux de calibrage caractérisant un échantillon dans une base de calibrage, directement à partir de spectres mesurés et sans recourir à des spectres purement théoriques obtenus par modélisation d'un chaîne d'acquisition. On s'affranchit ainsi des imprécisions liées aux imperfections d'une telle modélisation.

L'estimation des épaisseurs caractéristiques ne repose sur aucune hypothèse qui soit particulièrement simplificatrice.

L'erreur de mesure est moindre, grâce à l'utilisation de la série de spectres de calibrage formant une base de décomposition en matériaux de calibrage dite base de calibrage.

En outre, comme détaillé dans la suite, un tel procédé permet d'utiliser le modèle juste d'un comportement de l'atténuation dans chaque canal d'énergie (comportement que l'on peut nommer bruit de mesure, et modélisé par une loi statistique de Poisson). L'utilisation du modèle le plus juste offre une estimation précise des épaisseurs caractéristiques.

La détermination des estimations des épaisseurs caractéristiques associées à l'échantillon, comprend avantageusement une recherche d'un maximum des valeurs de la fonction de vraisemblance, les épaisseurs associées à ce maximum formant les estimations des épaisseurs caractéristiques.

De préférence, le procédé comprend au moins une étape d'interpolation des valeurs de la fonction de vraisemblance ou d'interpolation des spectres de calibrage.

Au moins une étape d'interpolation peut mettre en oeuvre une fonction d'interpolation non linéaire.

Le procédé selon l'invention peut comprendre en particulier les étapes suivantes :

- interpolation des valeurs de la fonction de vraisemblance par une fonction d'interpolation des vraisemblances dépendant d'au moins une variable, chaque variable correspondant à l'épaisseur d'un matériau de calibrage ; et
- recherche d'un maximum des valeurs de ladite fonction d'interpolation des vraisemblances, les épaisseurs associées à ce maximum formant les estimations des épaisseurs caractéristiques.

En complément ou en variante, le procédé selon l'invention peut comprendre les étapes suivantes :

- interpolation des spectres de calibrage par une fonction d'interpolation des spectres dépendant d'au moins une variable, chaque variable correspondant à l'épaisseur d'un matériau de calibrage ; et
- recherche d'un maximum des valeurs de ladite fonction d'interpolation des spectres, les épaisseurs associées à ce maximum formant les estimations des épaisseurs caractéristiques.

Selon un mode de réalisation particulier, on met en oeuvre les étapes suivantes :

- interpolation des valeurs de la fonction de vraisemblance par une fonction d'interpolation des vraisemblances, lesdites valeurs étant associées à des combinaisons d'épaisseurs connues de matériaux de calibrage telles que pour chaque matériau de calibrage, les épaisseurs associées sont situées dans un premier intervalle respectif ;
- recherche d'un maximum des valeurs de ladite fonction d'interpolation des vraisemblances, les épaisseurs associées à ce maximum formant des valeurs approchées des estimations des épaisseurs caractéristiques ;
- interpolation des spectres de calibrage par une fonction d'interpolation des spectres dépendant d'au moins une variable, chaque variable correspondant à l'épaisseur d'un matériau de calibrage et prenant des valeurs situées dans un deuxième intervalle respectif, plus étroit que le premier intervalle associé au même matériau de calibrage et centré sur la valeur approchée associée au même matériau de calibrage ;
- pour chacune des valeurs de ladite fonction d'interpolation des spectres, calcul de la valeur de la fonction de vraisemblance et recherche d'un maximum desdites valeurs de la fonction de vraisemblance, les épaisseurs associées à ce maximum formant des estimations consolidées des épaisseurs caractéristiques.

Selon un autre mode de réalisation particulier, pouvant être combiné au précédent, on met en oeuvre les étapes suivantes :

- interpolation des spectres de calibrage par une fonction d'interpolation des spectres, lesdits spectres de calibrage étant associés à des combinaisons d'épaisseurs connues de matériaux de calibrage telles que pour chaque matériau de calibrage, les épaisseurs associées sont situées dans un premier intervalle respectif ;
- pour chacune des valeurs de ladite fonction d'interpolation des spectres, calcul de la valeur de la fonction de vraisemblance et recherche d'un maximum desdites valeurs de la fonction de vraisemblance, les épaisseurs associées à ce maximum formant des valeurs approchées des estimations des épaisseurs caractéristiques ;
- interpolation des valeurs de la fonction de vraisemblance par une fonction d'interpolation des vraisemblances dépendant d'au moins une variable, chaque variable correspondant à l'épaisseur d'un matériau de calibrage et prenant des valeurs situées dans un deuxième intervalle respectif, plus étroit que le premier intervalle associé au même matériau de calibrage et centré sur la valeur approchée associée au même matériau de calibrage ; et

- recherche d'un maximum des valeurs de ladite fonction d'interpolation des vraisemblances, les épaisseurs associées à ce maximum formant des estimations consolidées des épaisseurs caractéristiques.

La fonction de vraisemblance est avantageusement déterminée à partir d'une modélisation statistique du spectre transmis de l'échantillon, selon une loi de Poisson.

La fonction de vraisemblance calculée à partir dudit spectre de calibrage et du spectre transmis de l'échantillon, peut être définie par :

$$ln\left(V\left(S^{ech}, S^{base}(L_1, …, L_M)\right)\right)$$

$$= C\left(-\sum_{j=1}^{R} S_j^{base}(L_1, …, L_M) + \sum_{j=1}^{R} S_j^{ech} \ln\left(S_j^{base}(L_1, …, L_M)\right)\right)$$

$V$ est la fonction de vraisemblance,
$ln$ est le logarithme népérien,

$S^{ech} = \sum_{j=1}^{R} S_j^{ech}$ est le spectre transmis de l'échantillon, présentant $j = R$ canaux d'énergie,

$S^{base}(L_1, …, L_M) = \sum_{j=1}^{R} S_j^{base}(L_1, …, L_M)$ est le spectre de calibrage à $j = R$ canaux d'énergie de la combinaison de $M$ matériaux de calibrage associés chacun à une épaisseur respective $L_1, …, L_M$,

$C$ est une constante.

De préférence, on utilise dans le procédé selon l'invention, au moins un spectre de calibrage ($S^{base}(L_1; L_2)$) correspondant au spectre transmis d'un étalon annexe, cet étalon annexe étant constitué d'une épaisseur déterminée d'un matériau de référence, et étant associé à une combinaison d'épaisseurs connues de matériaux de calibrage telle qu'au moins une épaisseur prend une valeur négative.

Le procédé selon l'invention peut comprendre une étape de fabrication d'une base de calibrage comprenant lesdits spectres de calibrage, comprenant :

- des mesures des spectres transmis de chacun parmi une pluralité d'empilements de cales, chaque cale étant constituée d'une épaisseur connue de matériau de calibrage ;
- une mesure du spectre transmis d'au moins un étalon annexe constitué d'une épaisseur déterminée d'un matériau de référence, et associé à une combinaison d'épaisseurs connues des matériaux de calibrage telle qu'au moins une épaisseur prend une valeur négative ;
- classement de l'ensemble des spectres mesurés dans une unique base de données reliant un spectre à une combinaison d'épaisseurs des matériaux de calibrage.

L'estimation des épaisseurs caractéristiques peut être suivie d'un calcul du numéro atomique effectif moyen de l'échantillon, en fonction des estimations des épaisseurs caractéristiques.

L'invention concerne également un produit programme d'ordinateur agencé pour mettre en oeuvre un procédé selon l'invention.

L'invention concerne enfin un dispositif de caractérisation d'un échantillon, comprenant une source électromagnétique émettant dans une bande spectrale X et/ou gamma, et un détecteur pour mesurer un spectre transmis de l'échantillon, ledit spectre étant défini par un nombre de photons transmis au travers de l'échantillon dans chaque canal d'une pluralité de canaux d'énergie. Selon l'invention, le dispositif comprend un processeur, agencé pour mettre en oeuvre le procédé selon l'invention, et une mémoire recevant les spectres de calibrage, la mémoire étant reliée au processeur.

## BRÈVE DESCRIPTION DES DESSINS

La présente invention sera mieux comprise à la lecture de la description d'exemples de réalisation donnés à titre purement indicatif et nullement limitatif, en faisant référence aux dessins annexés sur lesquels :

- la figure 1 illustre les fonctions d'atténuation linéaires d'un échantillon et de deux matériaux de calibrage, utilisés dans les procédés selon l'art antérieur ;
- la figure 2 illustre de manière schématique un dispositif de mesure d'un spectre d'énergie selon l'invention ;
- la figure 3 illustre de manière schématique un premier mode de réalisation de procédé selon l'invention ;
- la figure 4 illustre de manière schématique un dispositif selon l'invention ;
- la figure 5 illustre des spectres de calibrage selon l'invention ;
- la figure 6 illustre de manière schématique un deuxième mode de réalisation de procédé selon l'invention ; et
- la figure 7 illustre une variante du mode de réalisation de la figure 6 ; et
- la figure 8 illustre une base de calibrage enrichie selon l'invention.

## EXPOSÉ DÉTAILLÉ DE MODES DE RÉALISATION PARTICULIERS

L'invention concerne un procédé de caractérisation d'un échantillon. La caractérisation consiste ici à définir un spectre de l'énergie transmise à travers l'échantillon d'épaisseur L, comme le spectre de l'énergie transmise à travers un empilement de deux cales ou plus, chacune constituée d'un matériau de calibrage différent.

Chaque cale en matériau de calibrage présente une épaisseur, dite épaisseur caractéristique, ou épaisseur équivalente, que l'on cherche à estimer et qui caractérise l'échantillon.

Les matériaux de calibrage sont des matériaux dont les coefficients d'atténuation respectifs définissent une base de décomposition pour caractériser un échantillon quelconque. On considère deux matériaux de calibrage, voire plus.

Ainsi, on peut associer à l'échantillon une combinaison linéaire des spectres transmis de matériaux de calibrage, associés chacun à une épaisseur caractéristique.

Il s'agit, de manière équivalente, d'associer à l'échantillon une combinaison linéaire des coefficients d'atténuation de matériaux de calibrage, associés chacun à une épaisseur caractéristique (le spectre d'énergie $S_0(E)$ en l'absence d'échantillon est de cale étant une constante).

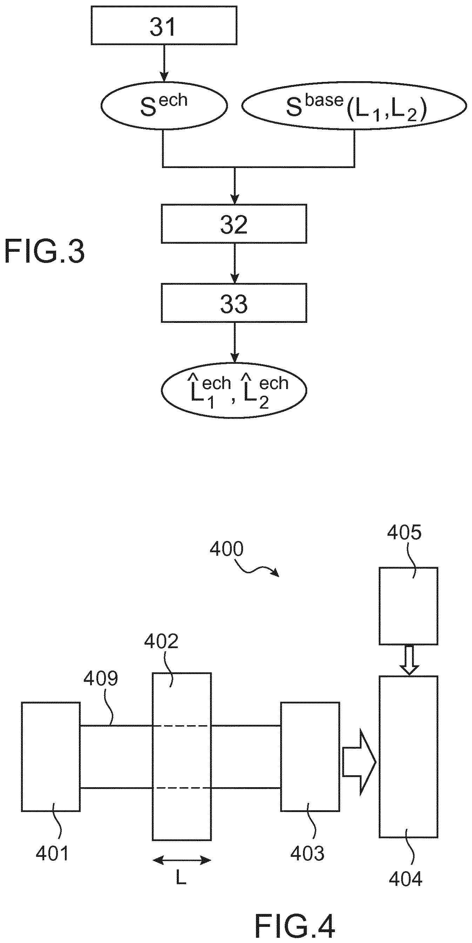

Le procédé selon l'invention est mis en oeuvre dans un dispositif 400 tel que représenté en figure 4. La source 401 et le détecteur 403 correspondent à la source 201 et au détecteur 203 décrits en référence à la figure 2.

L'épaisseur correspond à la distance parcourue dans l'échantillon 402, respectivement dans une cale en matériau de calibrage par un faisceau d'analyse 409 émis par la source de rayonnement électromagnétique 401 et reçu par le détecteur 403 après traversée de l'échantillon 402, respectivement la cale (voir figure 4).

L'échantillon désigne ici tout objet, notamment un échantillon biologique tel qu'un tissu biologique. Le procédé selon l'invention n'impose pas de condition sur son numéro atomique effectif moyen. Néanmoins, celui-ci est avantageusement inférieur à 30.

Au cours d'une étape initiale de calibrage, on acquiert une série de spectres de l'énergie transmise chacun à travers un empilement de cales. Chaque spectre d'énergie est défini par un nombre de photons transmis au travers de l'empilement, dans chaque canal d'une pluralité de canaux d'énergie situés dans une bande spectrale X et/ou gamma. Un tel spectre d'énergie est nommé spectre de calibrage, ou spectre d'étalonnage.

Chaque cale, également nommée étalon ou échantillon de calibrage, est constituée d'un matériau de calibrage, et présente une épaisseur connue. Il s'agit par exemple d'une lamelle constituée dudit matériau. Les plusieurs cales de l'empilement sont formées de matériaux de calibrage distincts.

Cette étape est de préférence mise en oeuvre une seule fois, les mêmes spectres de calibrage étant utilisés par la suite pour caractériser n'importe quel échantillon.

Cette étape est mise en oeuvre de préférence dans le dispositif de la figure 4, dans les mêmes conditions de mesure que le spectre transmis de l'échantillon tel que défini ci-après (même spectromètre, même puissance d'émission, même distance entre la source et le détecteur, même durée d'irradiation). Le cas échéant, on moyenne plusieurs mesures sur un même empilement de cales afin de s'affranchir du bruit photonique. En variante, les spectres de calibrage sont calculés à partir d'une modélisation numérique du dispositif de la figure 4, en particulier une modélisation numérique de la chaîne d'acquisition.

Dans une première étape 31, on acquiert le spectre transmis de l'échantillon, $S^{ech}$, à l'aide du détecteur 403. Le spectre transmis de l'échantillon est le spectre de l'énergie transmise à travers ledit échantillon. Il est défini par un nombre de photons par canal d'énergie, pour chaque canal d'une pluralité de canaux d'énergie. Le spectre transmis de l'échantillon comprend au moins deux canaux d'énergie, de préférence plusieurs dizaines. Par exemple, les canaux d'énergie couvrent ensemble toute la bande d'énergie allant de 10 à 120 keV, et présentent chacun une largeur de 1 keV. Les canaux d'énergie du spectre transmis de l'échantillon sont de préférence les mêmes que ceux des spectres de calibrage.

Pour chacun parmi la pluralité de spectres de calibrage, on calcule à l'étape 32 la valeur d'une fonction de vraisemblance, correspondant à la vraisemblance du spectre de calibrage compte tenu du spectre transmis de l'échantillon $S^{ech}$. Les différents canaux d'énergie d'un même spectre sont traités ensemble, et non indépendamment les uns des autres.

Chaque spectre de calibrage étant associé à une épaisseur connue d'un matériau de calibrage, la fonction de vraisemblance selon l'invention dépend des épaisseurs des matériaux de calibrage.

On considère par exemple deux matériaux de calibrage *MAT1* et *MAT2*. Un spectre de calibrage $S^{base}(L_1; L_2)$ est le spectre d'énergie transmis à travers une cale d'épaisseur $L_1$ en matériau *MAT*1 accolée à une cale d'épaisseur $L_2$ en matériau *MAT*2. La fonction de vraisemblance calculée à partir du spectre transmis l'échantillon $S^{ech}$ et du spectre de calibrage $S^{base}(L_1; L_2)$ dépend donc de $L_1$ et de $L_2$.

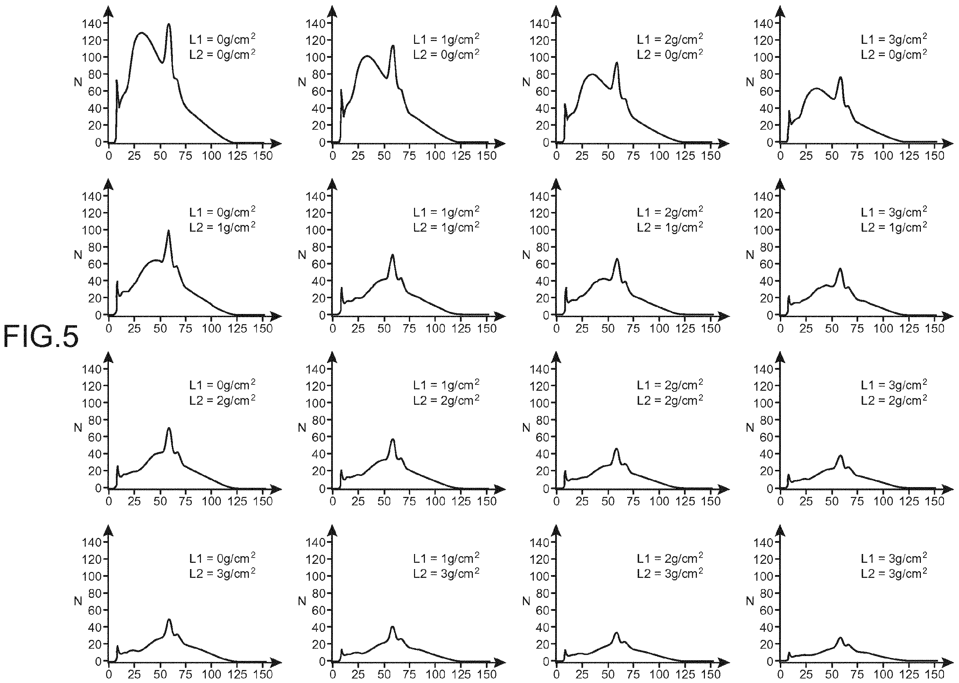

La figure 5 illustre une série de spectres de calibrage. $L_1$ peut prendre 4 valeurs 0, 1, 2 ou 3 (unité de longueur). $L_2$ peut prendre 4 valeurs 0, 1, 2 ou 3 (unité de longueur). On obtient donc 4x4=16 spectres de calibrage correspondant à toutes les combinaisons possibles de $L_1$ et $L_2$.

Soit $L_1$ pouvant prendre N1 valeurs, et $L_2$ pouvant prendre N2 valeurs, on obtient à l'issue de l'étape 32 N1xN2 valeurs de la fonction de vraisemblance.

A l'étape 33, on utilise ces valeurs de la fonction de vraisemblance pour déterminer une estimation d'une épaisseur $L_1^{ech}$ du matériau *MAT*1 et d'une épaisseur $L_2^{ech}$ du matériau *MAT*2, telles que le spectre transmis de l'échantillon corresponde au spectre transmis à travers la juxtaposition d'une cale d'épaisseur $L_1^{ech}$ en matériau *MAT1* et d'une cale d'épaisseur $L_2^{ech}$ en matériau *MAT*2. On note $\hat{L}_1^{ech}$ et $\hat{L}_2^{ech}$ les valeurs estimées de $L_1^{ech}$ et $L_2^{ech}$.

Il s'agit de rechercher, grâce à la base de calibrage, le spectre de calibrage composé d'une épaisseur $L_1$ du matériau *MAT*1 et d'une épaisseur $L_2$ du matériau *MAT*2, qui ressemble le plus au spectre transmis de l'échantillon.

Le critère utilisé pour l'estimation est le maximum de vraisemblance.

Dans l'exemple illustré en figure 3, on recherche parmi les NIxN2 valeurs de la fonction de vraisemblance précédemment calculée, quelle est la valeur maximale. En d'autres termes, on recherche dans la base de calibrage le spectre de calibrage qui ressemble le plus au spectre transmis de l'échantillon. Les épaisseurs $L_1$, $L_2$ associées à cette valeur maximale de la fonction de vraisemblance correspondent aux estimations $\hat{L}_1^{ech}$ et $\hat{L}_2^{ech}$ des épaisseurs caractéristiques $L_1^{ech}$ et $L_2^{ech}$.

Par exemple, soit une épaisseur $L_1$ de polyéthylène prenant les valeurs 0, 1, 2 ou 3 (unité de longueur), et une épaisseur $L_2$ de PVC prenant les valeurs 0, 1, 2 ou 3 (unité de longueur), on obtient pour un échantillon donné les valeurs de la fonction de vraisemblance suivantes :

| $L_2$ <br> $L_1$ | 0 | 1 | 2 | 3 |
|---|---|---|---|---|
| 0 | 4457 | 5173 | 5646 | 5925 |
| 1 | 5891 | 6068 | 6121 | 6075 |
| 2 | 6093 | 6044 | 5914 | 5721 |
| 3 | 5887 | 5705 | 5470 | 5192 |

On a alors $\hat{L}_1^{ech}=2$ et $\hat{L}_2^{ech}=1$, la valeur maximale de la fonction de vraisemblance étant 6121.

Ainsi, selon l'invention, pour estimer les épaisseurs caractéristiques, on utilise une pluralité de spectres d'énergie, associés à une pluralité de combinaisons d'épaisseurs connues de matériaux de calibrage. Dans le cas général à *M* matériaux de calibrage, chaque matériau de calibrage *y* pouvant prendre $U_y$ épaisseurs différentes, on dispose d'une base de calibrage comprenant $\prod_{y=1}^{M} U_y$ spectres de calibrage. Le nombre d'épaisseurs possibles pour chaque matériau peut varier. Chaque spectre de calibrage est noté $S^{base}(L_1, L_2, ..., L_M)$ *avec* $L_1$, $L_2$, ..., $L_M$ les épaisseurs des matériaux *MAT*1, *MAT*2*, ..., MATM.*

On compare le spectre transmis de l'échantillon à caractériser, à ceux de la base de calibrage en utilisant la fonction de vraisemblance suivante :

$$V(L_1, L_2, \ldots L_M) = \prod_{j=1}^{R} P\left(S_j^{ech} \middle| S_j^{base}(L_1, L_2, \ldots L_M)\right) \qquad (4)$$

$V(L_1, L_2, \ldots L_M)$ décrit la vraisemblance que le spectre transmis de l'échantillon corresponde au spectre transmis d'un empilement des épaisseurs $L_1, L_2, \ldots L_M$ des $M$ matériaux de la base de calibrage. $S_j^{ech}$ est le nombre de photons (ou coups) comptés dans le canal $j$, dans le spectre transmis de l'échantillon, $S^{ech}$, à $R$ canaux d'énergie. Les $R$ composantes du vecteur $S^{ech}$ sont des variables aléatoires indépendantes. $P\left(S_j^{ech} \middle| S_j^{base}(L_1, L_2, \ldots L_M)\right)$ est la probabilité que le canal $j$ du spectre transmis de l'échantillon, corresponde au canal $j$ du spectre de calibrage associé aux épaisseurs $L_1, L_2, \ldots L_M$ des matériaux 1 à M.

Ainsi, la fonction de vraisemblance est égale au produit, pour chacun des canaux $j$, des probabilités que le canal $j$ du spectre transmis de l'échantillon (spectre mesuré) corresponde au canal $j$ du spectre de calibrage associé aux épaisseurs $L_1, L_2, \ldots L_M$.

La fonction $P$ décrit une modélisation statistique du taux de transmission au travers de l'échantillon, dans chaque canal d'énergie.

Selon un mode de réalisation particulièrement avantageux, on suppose que l'arrivée des photons dans chaque canal d'énergie suit une loi statistique de Poisson. Le choix d'une loi de Poisson permet d'offrir la meilleure estimation, cette loi modélisant au mieux la réalité physique dans le spectromètre.

Ainsi, dans chaque canal d'énergie $j$, la probabilité qu'il y ait $S_j^{ech}$ photons transmis à travers l'empilement des épaisseurs $L_{ki}$ des matériaux $MATi$, $i = M$, pendant une durée d'irradiation prédéterminée, est donnée par :

$$P\left(S_j^{ech} \middle| v_j\right) = e^{-v_j} \frac{v_j^{S_j^{ech}}}{S_j^{ech}!} \qquad (5)$$

Avec $v_j$ le nombre de photons transmis par l'échantillon dans le canal $j$, pendant un temps d'irradiation T (identique pour le spectre transmis de l'échantillon et pour les spectres de calibrage). $P\left(S_j^{ech} \middle| v_j\right)$ est la probabilité de mesurer $S_j^{ech}$ coups pour une espérance $v_j$.

Si on suppose que les épaisseurs des matériaux 1 à M sont les épaisseurs $L_1, L_2, \ldots L_M$, on a :

$$v_j = \mu S_j^{base}(L_1, L_2, \ldots L_M,) \qquad (6)$$

$\mu$ traduit la dérive du spectromètre entre la mesure des spectres de calibrage et la mesure du spectre transmis de l'échantillon. On suppose que cette dérive est nulle, soit $\mu = 1$, hypothèse tout à fait réaliste.

La fonction de vraisemblance s'exprime alors :

$$V(L_1, L_2, \ldots L_M) = V\left(S^{ech}, S^{base}(L_1, L_2, \ldots L_M)\right)$$

$$= \prod_{j=1}^{R} exp\left(-S_j^{base}(L_1, L_2, \ldots L_M)\right) \frac{S_j^{base}(L_1, L_2, \ldots L_M)^{S_j^{ech}}}{S_j^{ech}!} \qquad (7)$$

On obtient les épaisseurs caractéristiques de l'échantillon en recherchant le maximum de la fonction de vraisemblance. Par commodité, il est plus simple de chercher à maximiser le logarithme de la fonction de vraisemblance, qui est plus rapide à calculer. On a en particulier :

$$\ln\big(V(L_1, L_2, \ldots L_M)\big)$$
$$\propto -\sum_{j=1}^{R} S_j^{base}(L_1, L_2, \ldots L_M) + \sum_{j=1}^{R} S_j^{ech} \ln\big(S_j^{base}(L_1, L_2, \ldots L_M)\big) \quad (8)$$

Puis, les épaisseurs caractéristiques des M matériaux de base sont données par :

$$\big(\hat{L}_1^{ech}, \hat{L}_2^{ech}, \ldots, \hat{L}_M^{ech}\big) = argmax(ln(V(L_1, L_2, \ldots L_M))) \quad (9)$$

On voit que l'invention met en oeuvre une approche probabiliste, basée sur des calculs de vraisemblance et utilisant comme critère d'estimation le maximum de vraisemblance.

Cette approche est basée sur le théorème de Bayes, et sur l'hypothèse selon laquelle toutes les combinaisons d'épaisseurs sont équiprobables. Cette hypothèse permet d'établir que :

$$\hat{\theta} = argmax(P(S^{ech}|\theta)) \quad (10)$$

avec $S^{ech}$ que le spectre transmis de l'échantillon, $\theta = L_1, L_2, \ldots L_M$, et $\hat{\theta} = \hat{L}_1^{ech}, \hat{L}_2^{ech}, \ldots, \hat{L}_M^{ech}$ les épaisseurs caractéristiques estimées.

Comme la base de calibrage ne comporte qu'un nombre fini et discret d'épaisseurs de matériaux, on calcule avantageusement par interpolation les vraisemblances pour les épaisseurs intermédiaires, soit en interpolant les spectres de calibrage, soit en interpolant la vraisemblance.

L'interpolation permet de limiter le nombre de spectre de calibrage nécessaire. On peut utiliser des modèles d'interpolation linéaires ou polynomiaux, ou bien tout modèle d'interpolation décrivant au mieux le comportement des spectres ou de la vraisemblance en fonction des épaisseurs caractéristiques des matériaux de calibrage.

Il peut s'agir d'une interpolation des spectres de calibrage. On dispose ainsi d'un plus grand nombre de spectres dits de référence, utilisés pour calculer la valeur d'une fonction de vraisemblance correspondant à la vraisemblance de ce spectre de référence compte tenu du spectre transmis de l'échantillon $S^{ech}$. Les spectres de référence désignent à la fois les spectres de calibrage, et les spectres interpolés (valeurs d'une fonction d'interpolation desdits spectres de calibrage).

En particulier, on peut réaliser une interpolation des spectres de calibrage par une fonction d'interpolation dépendant de l'épaisseur de l'un des matériaux de calibrage. On peut ainsi enrichir la base de calibrage par des spectres de calibrage dits interpolés.

On calcule ensuite les valeurs d'une fonction de vraisemblance, à partir du spectre de l'échantillon $S^{ech}$ et des spectres de la base de calibrage enrichie. On recherche ensuite le maximum des valeurs de la fonction de vraisemblance, ce maximum étant associé aux estimations des épaisseurs caractéristiques.

De préférence, on réalise une interpolation des spectres de calibrage par une fonction d'interpolation dépendant d'au moins une variable, chaque variable correspondant à l'épaisseur de l'un des matériaux de calibrage. Plus préférentiellement, la fonction d'interpolation dépend de plusieurs variables, correspondant aux épaisseurs de chacun des matériaux de calibrage.

On peut par exemple réaliser une interpolation linéaire sur le logarithme des spectres d'énergie. Soit une base de calibrage à deux matériaux de calibrage. Soit une épaisseur $l_1$ de matériau *MAT1* comprise entre $L_1^k$ et $L_1^{k+1}$, et une épaisseur $l_2$ de matériau *MAT2* comprise entre $L_2^q$ et $L_2^{q+1}$. Le spectre transmis par une épaisseur $l_1$ de matériau *MAT1* accolé à une épaisseur $l_2$ de matériau *MAT2* peut s'estimer en interpolant les spectres de la base de calibrage. On peut par exemple calculer les spectres en $l_1$, $L_2^q$ (respectivement en $l_1$, $L_2^{q+1}$) à partir des spectres en $L_1^k$, $L_2^q$

et $L_1^{k+1}$, $L_2^q$ (respectivement en $L_1^k$, $L_2^{q+1}$ et $L_1^{k+1}$, $L_2^{q+1}$). Pour chaque canal *j*, le nombre de photons est donné par :

$$\ln\left(S_j^{base}(l_1, L_2^{var})\right)$$

$$= \ln(S_j^{base}(L_1^k, L_2^{var}) + \ln\left(S_j^{base}(L_1^{k+1}, L_2^{var})\right) * \frac{L_1^k - l_1}{L_1^k - L_1^{k+1}} \quad (11)$$

avec $L_2^{var} = L_2^q$ ou $L_2^{var} = L_2^{q+1}$

On peut alors interpoler le spectre en $l_1$, $l_2$ à partir des spectres calculés précédemment en $l_1$, $L_2^q$ et $l_1$, $L_2^{q+1}$. La valeur du spectre au canal *j* pour une épaisseur $l_1$ de matériau *MAT1* accolé à une épaisseur $l_2$ de matériau *MAT2* s'obtient de la manière suivante :

$$\ln\left(S_j^{base}(l_1, l_2)\right) = \ln(S_j^{base}(l_1, L_2^q) + \ln\left(S_j^{base}(l_1, L_2^{q+1})\right) * \frac{l_1 - l_2}{l_1 - L_1^{l+1}} \quad (12)$$

En variante, on réalise une interpolation non linéaire, par exemple par un polynôme de Lagrange ou un polynôme d'Hermite cubique.

L'interpolation par une fonction d'interpolation dépendant de l'épaisseur d'un matériau de calibrage permet d'obtenir un spectre de calibrage pour chaque épaisseur de ce matériau de calibrage située dans un intervalle déterminé. L'interpolation des spectres peut également consister simplement à augmenter un nombre de spectres disponibles, en ajoutant aux spectres de calibrage initiaux un nombre fini de spectres obtenus par interpolation.

En variante ou en complément, on réalise une interpolation des valeurs de la fonction de vraisemblance. On dispose ainsi d'un plus grand nombre de valeurs parmi lesquelles on recherche un maximum.

On peut réaliser en particulier une interpolation des valeurs de la fonction de vraisemblance par une fonction d'interpolation dépendant d'au moins une variable, chaque variable correspondant à l'épaisseur de l'un des matériaux de calibrage. Plus préférentiellement la fonction d'interpolation dépend de plusieurs variables, correspondant aux épaisseurs de chacun des matériaux de calibrage.

On recherche ensuite le maximum des valeurs de la fonction de vraisemblance, parmi les valeurs initiales et les valeurs obtenues par interpolation. Ce maximum est associé aux estimations des épaisseurs caractéristiques.

On réalise par exemple une interpolation des valeurs de la fonction de vraisemblance à l'aide d'une fonction de deux variables. Chaque variable correspond à l'un des matériaux *MAT1* ou *MAT2*. Cette fonction est avantageusement non linéaire, par exemple une fonction polynomiale du deuxième ordre du type :

$$F(L_1, L_2) = a + bL_1 + cL_2 + dL_1L_2 + eL_1^2 + fL_2^2 \quad (13)$$

où *a, b, c, d, e, f* sont des constantes ajustées selon la méthode des moindres carrés, aux valeurs calculées à l'étape 32.

L'interpolation par une fonction d'interpolation dépendant de l'épaisseur d'un matériau de calibrage permet d'obtenir une valeur de la fonction de vraisemblance pour chaque épaisseur de ce matériau de calibrage située dans un intervalle déterminé. L'interpolation des valeurs de la fonction de vraisemblance peut également consister simplement à augmenter un nombre de valeurs de la fonction de vraisemblance disponibles, en ajoutant aux valeurs initiales un nombre fini de valeurs obtenues par interpolation.

Les interpolations permettent de recourir à un nombre réduit de spectres de calibrage, tout en offrant une haute précision de l'estimation des épaisseurs caractéristiques.

Ces deux types d'interpolations peuvent être combinés et/ou mis en oeuvre plusieurs fois pour affiner peu à peu l'estimation des épaisseurs caractéristiques (méthode itérative).

Par exemple, on réalise une interpolation des spectres de calibrage pour obtenir une pluralité de valeurs de la fonction de vraisemblance, puis on interpole ces valeurs et on recherche un maximum des valeurs obtenues après cette deuxième interpolation.

On peut également mettre en oeuvre plusieurs interpolations successives, en réduisant à chaque fois l'intervalle d'épaisseurs considérées et le pas, en fonction de l'estimation précédemment obtenue. En particulier, on met en oeuvre des cycles successifs de recherche d'un maximum des valeurs de la fonction de vraisemblance et estimation des épaisseurs caractéristiques. A chaque cycle, on diminue un pas des épaisseurs de matériau de calibrage associées aux spectres de calibrage et/ou aux valeurs de la fonction de vraisemblance. De préférence, la diminution de ce pas est accompagnée d'une diminution d'un intervalle d'épaisseurs considéré. Les spectres de calibrage désignent ici les spectres de calibrage initiaux et le cas échéant des spectres obtenus par interpolation(s). Les valeurs de la fonction de vraisemblance désignent ici les valeurs calculées à partir de spectres de calibrage et le cas échéant des valeurs obtenues directement par interpolation(s).

Le détecteur 403 est relié à un processeur 404, adapté à mettre en oeuvre le procédé de caractérisation selon l'invention. Le processeur 404 est relié à une mémoire 405 stockant les spectres de calibrage. Le processeur reçoit en entrée un spectre transmis de l'échantillon, et fournit en sortie les estimations des épaisseurs caractéristiques de l'échantillon.

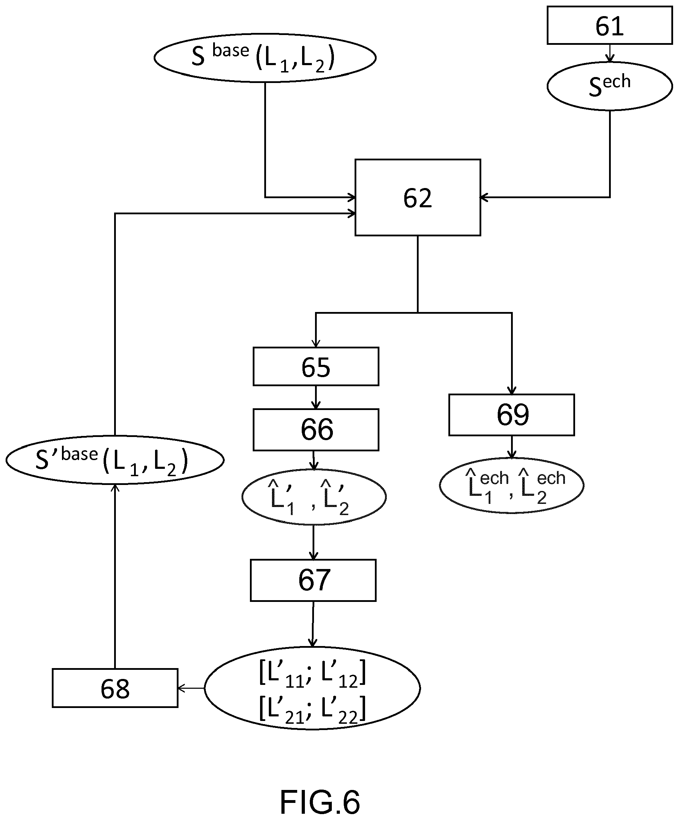

La figure 6 illustre un exemple avantageux de procédé mettant en oeuvre deux cycles successifs de recherche d'un maximum des valeurs de la fonction de vraisemblance et estimation des épaisseurs caractéristiques.

Dans une première étape 61, on acquiert le spectre transmis de l'échantillon, $S^{ech}$. On calcule ensuite (étape 62) les valeurs d'une fonction de vraisemblance à partir de ce spectre $S^{ech}$ et de chacun des spectres de calibrage $S^{base}(L_1; L_2)$ d'une base de calibrage initiale. La base de calibrage initiale correspond à des empilements de cales d'une épaisseur $L_1$ du matériau $MAT1$ et une épaisseur $L_2$ du matériau $MAT2$, avec :

- $L_1$ s'étendant sur un premier intervalle associé au matériau $MAT1$ (intervalle [0; $L_{MAT1\ max}$] par exemple) et selon un premier pas d'échantillonnage associé au matériau $MAT1$ (pas $\dfrac{L_{MAT1\ max}}{N1}$), et

- $L_2$ s'étendant sur un premier intervalle associé au matériau $MAT2$ (intervalle [0; $L_{MAT2\ max}$] par exemple) et selon un premier pas d'échantillonnage associé au matériau $MAT2$ (pas $\dfrac{L_{MAT2\ max}}{N2}$).

On obtient ainsi N1*N2 spectres acquis avec des combinaisons d'épaisseurs allant de 0 à $L_{MAT1\ max}$ pour le matériau $MAT1$ et de 0 à $L_{MAT2\ max}$ pour le matériau $MAT2$.

A l'étape 65, on réalise une interpolation des valeurs de la fonction de vraisemblance. Ensuite, on recherche le maximum des valeurs de la fonction de vraisemblance disponibles après interpolation (étape 66). Ce maximum est associé à des épaisseurs $\hat{L}'_1$ et $\hat{L}'_2$ respectivement du matériau $MAT1$ et du matériau $MAT2$, et forment des valeurs approchées des estimations des épaisseurs caractéristiques.

A l'étape 67, on détermine, pour chaque matériau de calibrage, un deuxième intervalle respectif, plus étroit que le premier intervalle associé au même matériau de calibrage, et centré sur la valeur approchée correspondante. On obtient les deuxièmes intervalles [L'$_{11}$ ; L'$_{12}$] et [L'$_{21}$ ; L'$_{22}$].

On réalise ensuite une interpolation des spectres de la base de calibrage initiale sur ces deuxièmes intervalles [L'$_{11}$ ; L'$_{12}$] et [L'$_{21}$ ; L'$_{22}$] (étape 68). On obtient une base de calibrage enrichie, comprenant les spectres $S'^{base}(L_1; L_2)$.

La base de calibrage enrichie correspond à :

- une épaisseur $L_1$ du matériau $MAT1$ s'étendant sur le deuxième intervalle [L'$_{11}$ ; L'$_{12}$] (plus étroit que l'intervalle [0; $L_{MAT1\ max}$]) et selon un deuxième pas d'échantillonnage respectif inférieur au premier pas d'échantillonnage associé au même matériau de calibrage (pas inférieur à $\dfrac{L_{MAT1\ max}}{N1}$), et

- une épaisseur $L_2$ du matériau $MAT2$ s'étendant sur le deuxième intervalle [L'$_{21}$ ; L'$_{22}$] (plus étroit que l'intervalle [0 ; $L_{MAT2\ max}$]) et selon un deuxième pas d'échantillonnage respectif inférieur au premier pas d'échantillonnage associé au même matériau de calibrage (pas inférieur à $\dfrac{L_{MAT2\ max}}{N1}$).

On réitère ensuite l'étape 62 de calcul des valeurs d'une fonction de vraisemblance, à partir cette fois du spectre $S^{ech}$ et de chacun des spectres de la base de calibrage enrichie $S'^{base}(L_1; L_2)$.

Finalement, on recherche le maximum des valeurs ainsi calculées (étape 69). Ce maximum est associé à des épaisseurs $\hat{L}_1^{ech}$ et $\hat{L}_2^{ech}$ respectivement du matériau $MAT1$ et du matériau $MAT2$, et forment des estimations consolidées des épaisseurs caractéristiques.

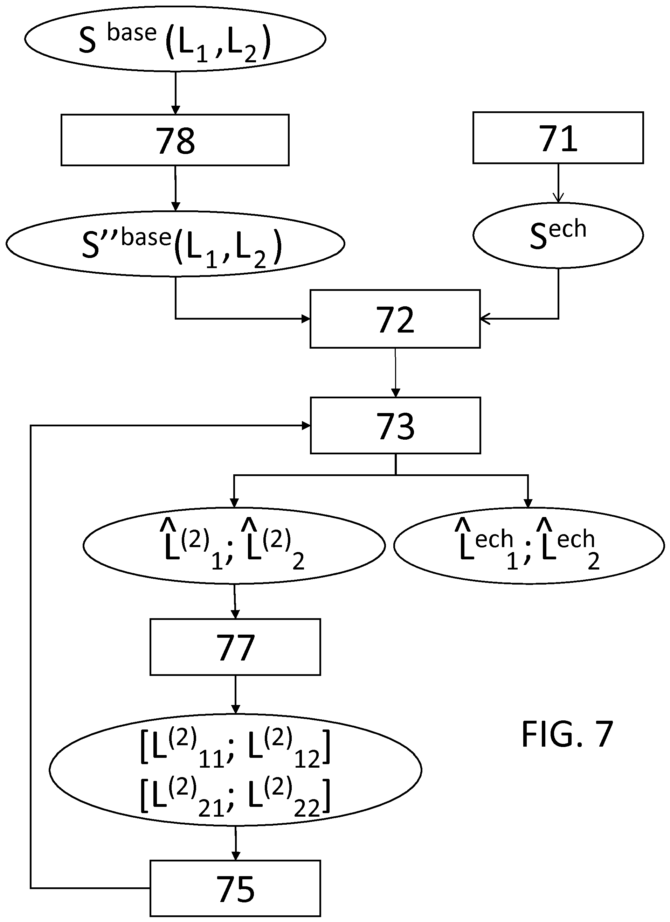

Selon une variante représentée en figure 7, on réalise en première interpolation, une interpolation des spectres de calibrage de la base de calibrage initiale $S^{base}(L_1; L_2)$ définie ci-dessus (étape 78). On obtient une base de calibrage enrichie $S''^{base}(L_1; L_2)$ correspondant aux N1*N2 spectres initiaux, plus des valeurs obtenues par interpolation. La base de calibrage enrichie est associée, pour chaque matériau de calibrage, à un premier intervalle d'épaisseurs respectif.

Ensuite, on acquiert le spectre transmis de l'échantillon, $S^{ech}$ (étape 71), et on calcule les valeurs d'une fonction de vraisemblance à partir de ce spectre $S^{ech}$ et de chacun des spectres de la base de calibrage enrichie (étape 72).

On recherche le maximum des valeurs de la fonction de vraisemblance ainsi obtenues (étape 73). Les épaisseurs associées à ce maximum forment des valeurs approchées $\hat{L}_1^{(2)}$ et $\hat{L}_2^{(2)}$ des estimations des épaisseurs caractéristiques.

On détermine ensuite à l'étape 77 des deuxièmes intervalles $[L_{11}^{(2)}; L_{12}^{(2)}]$ et $[L_{21}^{(2)}; L_{22}^{(2)}]$, chacun associé à l'un des matériaux de calibrage. Chaque deuxième intervalle est centré sur la valeur approchée associée au même matériau de calibrage précédemment obtenue. Chaque deuxième intervalle est plus étroit que le premier intervalle d'épaisseurs tel que défini ci-dessus, associé au même matériau de calibrage et à la base de calibrage enrichie.

On réalise alors une interpolation des valeurs de la fonction de vraisemblance (étape 75). Ensuite, on recherche le maximum des valeurs de la fonction de vraisemblance (nouvelle itération de l'étape 73), cette fois parmi les valeurs de la fonction de vraisemblance disponibles après cette deuxième interpolation. Ce maximum est associé à des épaisseurs $\hat{L}_1^{ech}$ et $\hat{L}_2^{ech}$ respectivement du matériau $MAT1$ et du matériau $MAT2$, et forment des estimations consolidées des épaisseurs caractéristiques.

Comme précisé ci-avant, les spectres de calibrage peuvent être obtenus expérimentalement, à l'aide d'empilements de cales en matériau de calibrage d'épaisseurs respectives connues, ou simulées numériquement. On obtient ainsi une première base de calibrage.

Chaque matériau de calibrage présente un numéro atomique effectif. Le maximum et le minimum des numéros atomiques effectifs des matériaux de calibrage considérés définissent ensemble un intervalle de numéro atomique effectif. Si le numéro atomique effectif moyen de l'échantillon se situe en dehors de cet intervalle, au moins une des épaisseurs caractéristiques associées peut être négative. Par exemple, si le matériau $MAT1$ est du polyéthylène ($Z_{eff}$= 5,53), le matériau $MAT2$ est du PVC ($Z_{eff}$ =4,23), un échantillon en fer ($Z_{eff}$ = 26), en chrome ($Z_{eff}$ = 24), ou en chlore ($Z_{eff}$ = 17), sera caractérisé par une épaisseur caractéristique de polyéthylène négative. On se trouve alors dans une zone non couverte par la première base de calibrage.

Une solution courante consiste à réaliser une extrapolation des points de la première base de calibrage.

On propose ici une solution plus fiable. Il s'agit d'enrichir la première base de calibrage à l'aide de mesures ou de simulations impliquant un étalon annexe d'épaisseur déterminée constitué d'un matériau de référence, distinct des matériaux de calibrage $MAT1$ et $MAT2$. Ledit matériau de référence présente un numéro atomique effectif situé en dehors de l'intervalle décrit ci-dessus. On connaît les épaisseurs caractéristiques de cet étalon annexe, dans la base de matériau de calibrage, et l'une au moins de ces épaisseurs caractéristiques est négative. En d'autres termes, le spectre de l'énergie transmise à travers l'étalon annexe est égal ou spectre de l'énergie transmise à travers un empilement virtuel de cales en matériau de calibrage, l'une cale ou moins présentant une épaisseur négative (d'où le terme « virtuel »).

On enrichit ainsi la première base de calibrage par des points associés à des épaisseurs caractéristiques négatives. Les épaisseurs caractéristiques associées audit étalon annexe peuvent être déterminées à l'aide d'un procédé selon l'art antérieur tel que décrit en introduction.

Ainsi, chaque spectre de calibrage correspond au spectre de l'énergie transmis à travers un empilement de cales formées chacune d'une épaisseur connue de matériau de calibrage, le cas échéant une cale présentant une épaisseur négative (cale virtuelle).

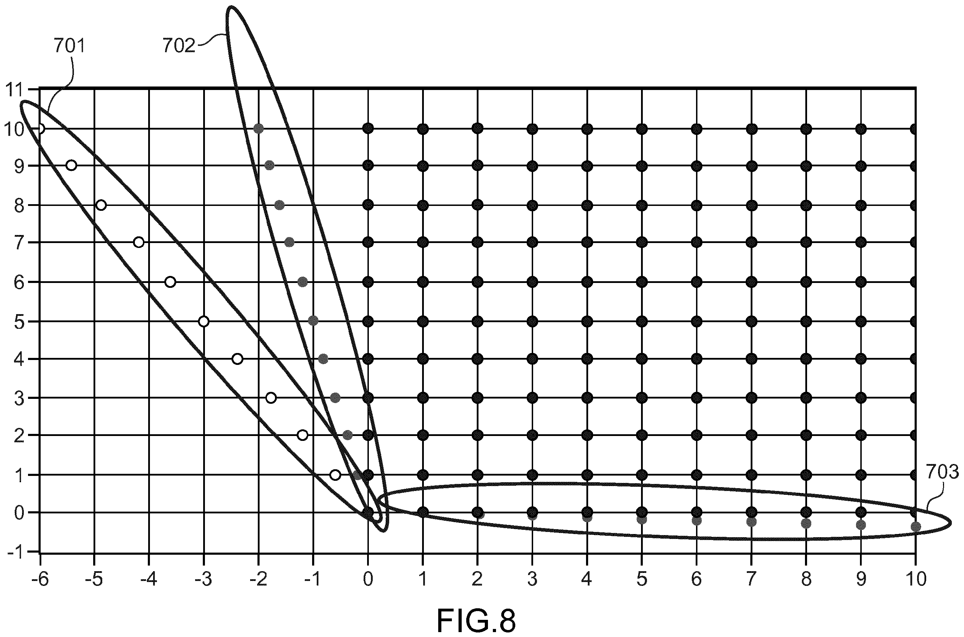

On a représenté de façon schématique, en figure 8, les points d'une base de calibrage ainsi enrichie. Une première série de points correspond à des combinaisons de polyéthylène et de PVC, les épaisseurs de polyéthylène et de PVC prenant des valeurs entières entre 0 et 10 inclus (unité de longueur). Cette base de calibrage est enrichie par des mesures de spectres d'énergie de cales de différentes épaisseurs de calcium ($Z_{eff}$ = 20, points 701), de soufre ($Z_{eff}$ = 16, points 702), et de béryllium ($Z_{eff}$ = 4, points 703).

L'invention n'est pas limitée à une décomposition dans une base de deux matériaux de calibrage. On peut réaliser une décomposition dans une base de plus de deux matériaux de calibrage, par exemple trois, quatre ou plus. En outre, les matériaux de calibrage considérés n'ont pas à vérifier de condition particulière. L'utilisation de bases à plus de 2 matériaux peut s'avérer utile lorsqu'il existe une continuité du spectre d'énergie (dite « k-edge ») dans la gamme d'énergie mesurée.

Le procédé selon l'invention comprend aussi, après l'estimation des épaisseurs caractéristiques, une étape supplémentaire de traitement, comprenant par exemple l'estimation d'une concentration dans l'échantillon, ou une estimation du numéro atomique effectif de l'échantillon.

En particulier, on peut déterminer une fonction *f* telle que :

$$Z_{eff} = f\left(\rho_1 \hat{L}_1^{ech}, \rho_2 \hat{L}_2^{ech}, \dots, \rho_M \hat{L}_M^{ech}\right) \qquad (14)$$

soient M matériaux de calibrage, $\rho_i$ la masse volumique du matériau de calibrage *i*, $\hat{L}_i^{ech}$ l'estimation de la longueur caractéristique associée au matériau de calibrage *i*.

On a par exemple :

$$f(x) = a + bx + cx^2 + dx^3, avec \; x = \frac{\rho_1 \hat{L}_1^{ech}}{\rho_1 \hat{L}_1^{ech} + \rho_2 \hat{L}_2^{ech}} \qquad (15)$$

Avec *a, b, c, d* des réels et par exemple *MAT1* du polyéthylène, *MAT2* du PVC.

Si la base contient plus de deux matériaux, on peut utiliser la fonction suivante :

$$f(\rho_i, \hat{L}_i^{ech}) = \left( \frac{\sum_{i=1}^{M} \rho_i \hat{L}_i^{ech} Z_{eff,i}^p}{\sum_{i=1}^{M} \rho_i \hat{L}_i^{ech}} \right)^{1/p} \qquad (16)$$

*p* étant estimé à partir de mesures effectuées sur des matériaux de $Z_{eff,i}$ connus- et M>2.

L'invention trouve son application notamment dans le domaine médical, notamment pour l'analyse d'échantillons biologiques par tomographie spectrale.

L'invention n'est pas limitée aux exemples qui viennent d'être développés, et on pourra imaginer de nombreuses variantes sans sortir du cadre de la présente invention, par exemple d'autres matériaux de calibrage, d'autres types d'interpolations, etc. Par exemple, d'autres définitions de la fonction de vraisemblance peuvent être envisagées, basées sur d'autres modélisations statistiques du taux de transmission à travers l'échantillon dans le spectromètre.

## Revendications

**1.** Procédé de caractérisation d'un échantillon (402), par estimation d'une pluralité d'épaisseurs dites caractéristiques, chacune associée à un matériau dit de calibrage, comprenant les étapes suivantes :

- acquisition (31 ; 61) d'un spectre d'énergie, dit spectre transmis de l'échantillon ($S^{ech}$), ledit spectre étant défini par un nombre de photons transmis au travers de l'échantillon dans chaque canal d'une pluralité de canaux d'énergie situés dans une bande spectrale X et/ou gamma ;
- pour chaque spectre parmi une pluralité de spectres d'énergie dits de calibrage ($S^{base}(L_1; L_2)$), calcul (32 ; 62) de la valeur d'une fonction de vraisemblance à partir dudit spectre de calibrage ($S^{base}(L_1; L_2)$) et du spectre transmis de l'échantillon ($S^{ech}$), chaque spectre de calibrage ($S^{base}(L_1; L_2)$) correspondant au spectre transmis d'un empilement de cales, chaque cale étant formée d'une épaisseur connue de matériau de calibrage ;
- détermination (33 ; 66, 69) des estimations des épaisseurs caractéristiques $(\hat{L}_1^{ech}; \hat{L}_2^{ech})$ associées à l'échantillon, à partir desdites valeurs d'une fonction de vraisemblance et selon le critère de maximum de vraisemblance ;

**caractérisé par** un calcul du numéro atomique effectif moyen de l'échantillon, en fonction des estimations des épaisseurs caractéristiques $(L_1^{ech}; L_2^{ech})$.

**2.** Procédé selon la revendication 1, **caractérisé en ce que** le calcul du numéro atomique effectif moyen de l'échantillon met en oeuvre la détermination d'une fonction *f* telle que :

$$Z_{eff} = f\left(\rho_1 \hat{L}_1^{ech}, \rho_2 \hat{L}_2^{ech}, \dots, \rho_M \hat{L}_M^{ech}\right)$$

soient M matériaux de calibrage, $\rho_i$ la masse volumique du matériau de calibrage *i*, $\hat{L}_i^{ech}$ l'estimation de l'épaisseur caractéristique associée au matériau de calibrage *i*.

**3.** Procédé selon la revendication 2, **caractérisé en ce que** ladite fonction *f* est définie par :

$$f(x) = a + bx + cx^2 + dx^3, avec\ x = \frac{\rho_1 \hat{L}_1^{ech}}{\rho_1 \hat{L}_1^{ech} + \rho_2 \hat{L}_2^{ech}}$$

avec *a, b, c, d* des réels.

**4.** Procédé selon la revendication 2, **caractérisé en ce que** ladite fonction *f* est définie par :

$$f\left(\rho_i, \hat{L}_i^{ech}\right) = \left(\frac{\sum_{i=1}^{M} \rho_i \hat{L}_i^{ech} Z_{eff,i}^p}{\sum_{i=1}^{M} \rho_i \hat{L}_i^{ech}}\right)^{1/p}$$

*p* étant estimé à partir de mesures effectuées sur des matériaux de numéro atomique effectif moyen connus, $Z_{eff,i}$, et M>2.

**5.** Procédé selon l'une quelconque des revendications 1 à 4, **caractérisé en ce que** la détermination (33 ; 66, 69) des estimations des épaisseurs caractéristiques $\left(L_1^{ech};\ L_2^{ech}\right)$ associées à l'échantillon, comprend une recherche d'un maximum des valeurs de la fonction de vraisemblance, les épaisseurs associées à ce maximum formant les estimations $\left(\hat{L}_1^{ech};\ \hat{L}_2^{ech}\right)$ des épaisseurs caractéristiques $\left(L_1^{ech};\ L_2^{ech}\right)$.

**6.** Procédé selon l'une quelconque des revendications 1 à 5, **caractérisé en ce qu'**il comprend au moins une étape d'interpolation des valeurs de la fonction de vraisemblance ou d'interpolation des spectres de calibrage.

**7.** Procédé selon la revendication 6, **caractérisé en ce qu'**il comprend les étapes suivantes :

- interpolation (65) des valeurs de la fonction de vraisemblance par une fonction d'interpolation des vraisemblances dépendant d'au moins une variable, chaque variable correspondant à l'épaisseur d'un matériau de calibrage ; et
- recherche (66) d'un maximum des valeurs de ladite fonction d'interpolation des vraisemblances, les épaisseurs associées à ce maximum formant les estimations des épaisseurs caractéristiques.

**8.** Procédé selon la revendication 6 ou 7, **caractérisé en ce qu'**il comprend les étapes suivantes :

- interpolation (68) des spectres de calibrage par une fonction d'interpolation des spectres dépendant d'au moins une variable, chaque variable correspondant à l'épaisseur d'un matériau de calibrage ; et
- recherche d'un maximum des valeurs de ladite fonction d'interpolation des spectres, les épaisseurs associées à ce maximum formant les estimations des épaisseurs caractéristiques.

**9.** Procédé selon l'une quelconque des revendications 6 à 8, **caractérisé en ce que** l'on met en oeuvre les étapes suivantes :

- interpolation (65) des valeurs de la fonction de vraisemblance par une fonction d'interpolation des vraisemblances, lesdites valeurs étant associées à des combinaisons d'épaisseurs connues de matériaux de calibrage telles que pour chaque matériau de calibrage, les épaisseurs associées sont situées dans un premier intervalle respectif ;

- recherche d'un maximum des valeurs de ladite fonction d'interpolation des vraisemblances, les épaisseurs associées à ce maximum formant des valeurs approchées ($\hat{L}'_1$, $\hat{L}'_2$) des estimations des épaisseurs caractéristiques ;

- interpolation (68) des spectres de calibrage par une fonction d'interpolation des spectres dépendant d'au moins une variable, chaque variable correspondant à l'épaisseur d'un matériau de calibrage et prenant des valeurs situées dans un deuxième intervalle respectif ($[L'_{11}, L'_{12}]$ ; $[L'_{21}, L\text{-}_{22}]$), plus étroit que le premier intervalle associé au même matériau de calibrage et centré sur la valeur approchée ($\hat{L}'_1$, $\hat{L}'_2$) associée au même matériau de calibrage ;

- pour chacune des valeurs de ladite fonction d'interpolation des spectres, calcul (62) de la valeur de la fonction de vraisemblance et recherche (69) d'un maximum desdites valeurs de la fonction de vraisemblance, les épaisseurs associées à ce maximum formant des estimations consolidées ($\hat{L}_1^{ech}$ ; $\hat{L}_2^{ech}$) des épaisseurs caractéristiques.

**10.** Procédé selon l'une quelconque des revendications 6 à 9, **caractérisé en ce que** l'on met en oeuvre les étapes suivantes :

- interpolation (78) des spectres de calibrage par une fonction d'interpolation des spectres, lesdits spectres de calibrage étant associés à des combinaisons d'épaisseurs connues de matériaux de calibrage telles que pour chaque matériau de calibrage, les épaisseurs associées sont situées dans un premier intervalle respectif ;

- pour chacune des valeurs de ladite fonction d'interpolation des spectres, calcul (72) de la valeur de la fonction de vraisemblance et recherche (73) d'un maximum desdites valeurs de la fonction de vraisemblance, les épaisseurs associées à ce maximum formant des valeurs approchées ($\hat{L}_1^{(2)}, \hat{L}_2^{(2)}$) des estimations des épaisseurs caractéristiques ;

- interpolation (75) des valeurs de la fonction de vraisemblance par une fonction d'interpolation des vraisemblances dépendant d'au moins une variable, chaque variable correspondant à l'épaisseur d'un matériau de calibrage et prenant des valeurs situées dans un deuxième intervalle respectif ($[L_{11}^{(2)}; L_{12}^{(2)}]$ ; $[L_{21}^{(2)}; L_{22}^{(2)}]$), plus étroit que le premier intervalle associé au même matériau de calibrage et centré sur la valeur approchée ($\hat{L}_1^{(2)}, \hat{L}_2^{(2)}$) associée au même matériau de calibrage ; et

- recherche (73) d'un maximum des valeurs de ladite fonction d'interpolation des vraisemblances, les épaisseurs associées à ce maximum formant des estimations consolidées ($\hat{L}_1^{ech}$ ; $\hat{L}_2^{ech}$) des épaisseurs caractéristiques.

**11.** Procédé selon l'une quelconque des revendications 1 à 10, **caractérisé en ce que** la fonction de vraisemblance est déterminée à partir d'une modélisation statistique du spectre transmis de l'échantillon ($S^{ech}$), selon une loi de Poisson.

**12.** Procédé selon l'une quelconque des revendications 1 à 11, **caractérisé en ce que** la fonction de vraisemblance calculée à partir dudit spectre de calibrage et du spectre transmis de l'échantillon, est définie par :

$$ln\left(V\left(S^{ech}, S^{base}(L_1, \dots, L_M)\right)\right)$$

$$= C\left(-\sum_{j=1}^{R} S_j^{base}(L_1, \dots, L_M) + \sum_{j=1}^{R} S_j^{ech} ln\left(S_j^{base}(L_1, \dots, L_M)\right)\right)$$

$V$ est la fonction de vraisemblance,

*ln* est le logarithme népérien,

$$S^{ech} = \sum_{j=1}^{R} S_j^{ech}$$

est le spectre transmis de l'échantillon, présentant *j* = R canaux d'énergie,

$$S^{base}(L_1, \ldots, L_M) = \sum_{j=1}^{R} S_j^{base}(L_1, \ldots, L_M)$$

est le spectre de calibrage à *j* = R canaux d'énergie de la combinaison de *M* matériaux de calibrage associés chacun à une épaisseur respective $L_1, \ldots, L_M$, *C* est une constante.

**13.** Procédé selon l'une quelconque des revendications 1 à 12, **caractérisé par** l'utilisation d'au moins un spectre de calibrage ($S^{bas}(L_1; L_2)$) correspondant au spectre transmis d'un étalon annexe, cet étalon annexe étant constitué d'une épaisseur déterminée d'un matériau de référence, et étant associé à une combinaison d'épaisseurs connues de matériaux de calibrage telle qu'au moins une épaisseur prend une valeur négative.

**14.** Procédé selon l'une quelconque des revendications 1 à 13, **caractérisé par** une étape de fabrication d'une base de calibrage comprenant lesdits spectres de calibrage ($S^{base}(L_1; L_2)$), comprenant :

- des mesures des spectres transmis de chacun parmi une pluralité d'empilements de cales, chaque cale étant constituée d'une épaisseur connue de matériau de calibrage ;
- une mesure du spectre transmis d'au moins un étalon annexe constitué d'une épaisseur déterminée d'un matériau de référence, et associé à une combinaison d'épaisseurs connues des matériaux de calibrage telle qu'au moins une épaisseur prend une valeur négative ;
- classement de l'ensemble des spectres mesurés dans une unique base de données reliant un spectre à une combinaison d'épaisseurs des matériaux de calibrage.

**15.** Dispositif (400) de caractérisation d'un échantillon (402), comprenant une source électromagnétique (401) émettant dans une bande spectrale X et/ou gamma , et un détecteur (403) pour mesurer un spectre transmis ($S^{ech}$) de l'échantillon, ledit spectre ($S^{ech}$) étant défini par un nombre de photons transmis au travers de l'échantillon (402) dans chaque canal d'une pluralité de canaux d'énergie, **caractérisé en ce qu'**il comprend un processeur (404), agencé pour mettre en oeuvre le procédé selon l'une quelconque des revendications 1 à 14, et une mémoire (405) recevant les spectres de calibrage ($S^{base}(L_1; L_2)$) et reliée au processeur (404).

**Patentansprüche**

**1.** Verfahren zum Charakterisieren einer Probe (402) durch Schätzen einer Mehrzahl von sogenannten charakteristischen Dicken, die jeweils einem sogenannten Kalibrierungsmaterial zugeordnet sind, umfassend die folgenden Schritte:

- Erfassen (31; 61) eines Energiespektrums, dem sogenannten übertragenen Spektrum der Probe ($S^{ech}$), wobei das Spektrum durch eine Anzahl von Photonen definiert ist, die durch die Probe in jedem Kanal einer Mehrzahl von Energiekanälen übertragen werden, die in einem Röntgen- und/oder Gamma-Spektralband liegen;
- für jedes Spektrum aus einer Mehrzahl von sogenannten Kalibrierungs-Energiespektren ($S^{base}(L_1; L_2)$), Berechnen (32; 62) des Werts einer Wahrscheinlichkeitsfunktion ausgehend von dem Kalibrierungsspektrum ($S^{base}(L_1; L_2)$) und dem übertragenen Spektrum der Probe ($S^{ech}$), wobei jedes Kalibrierungsspektrum ($S^{base}(L_1; L_2)$) dem übertragenen Spektrum einer Stapelung von Klötzen entspricht, wobei jeder Klotz aus einer bekannten Kalibrierungsmaterialdicke gebildet ist;
- Bestimmen (33; 66, 69) der Schätzungen der charakteristischen Dicken ($\hat{L}_1^{ech}$; $\hat{L}_2^{ech}$), die der Probe zugeordnet sind, ausgehend von den Werten einer Wahrscheinlichkeitsfunktion und nach dem Maximum-Likelihood-Kriterium;

**gekennzeichnet durch** ein Berechnen der durchschnittlichen effektiven Ordnungszahl der Probe in Abhängigkeit von den Schätzungen der charakteristischen Dicken $(L_1^{ech}; L_2^{ech})$,.

**2.** Verfahren nach Anspruch 1, **dadurch gekennzeichnet, dass** Berechnen der durchschnittlichen effektiven Ordnungszahl der Probe die Bestimmung einer Funktion *f* umfasst, so dass:

$$Z_{eff} = f\left(\rho_1 \hat{L}_1^{ech}, \rho_2 \hat{L}_2^{ech}, \dots, \rho_M \hat{L}_M^{ech}\right)$$

wobei M die Kalibrierungsmaterialien sind, $\rho_i$ die Dichte des Kalibrierungsmaterials *i* ist, $\hat{L}_i^{ech}$ die Schätzung der charakteristischen Dicke ist, die dem Kalibrierungsmaterial i zugeordnet ist.

3. Verfahren nach Anspruch 2, **dadurch gekennzeichnet, dass** die Funktion *f* definiert ist durch:

$$f(x) = a + bx + cx^2 + dx^3, mit\ x = \frac{\rho_1 \hat{L}_1^{ech}}{\rho_1 \hat{L}_1^{ech} + \rho_2 \hat{L}_2^{ech}}$$

wobei *a, b, c, d* reelle Zahlen sind.

4. Verfahren nach Anspruch 2, **dadurch gekennzeichnet, dass** die Funktion *f* definiert ist durch:

$$f\left(\rho_i, \hat{L}_i^{ech}\right) = \left(\frac{\sum_{i=1}^{M} \rho_i \hat{L}_i^{ech} Z_{eff,i}^p}{\sum_{i=1}^{M} \rho_i \hat{L}_i^{ech}}\right)^{1/p}$$

wobei p ausgehend von Messungen geschätzt wird, die an Materialien mit bekannter durchschnittlicher effektiver Ordnungszahl $Z_{eff,i}$ durchgeführt werden, und M > 2.

5. Verfahren nach einem der Ansprüche 1 bis 4, **dadurch gekennzeichnet, dass** das Bestimmen (33; 66, 69) der Schätzungen der charakteristischen Dicken $\left(L_1^{ech}; L_2^{ech}\right)$, die der Probe zugeordnet sind, eine Suche nach einem Maximalwert der Werte der Wahrscheinlichkeitsfunktion umfasst, wobei die diesem Maximalwert zugeordneten Dicken die Schätzungen $\left(\hat{L}_1^{ech}; \hat{L}_2^{ech}\right)$ der charakteristischen Dicken $\left(L_1^{ech}; L_2^{ech}\right)$ bilden.

6. Verfahren nach einem der Ansprüche 1 bis 5, **dadurch gekennzeichnet, dass** es zumindest einen Schritt der Interpolation der Werte der Wahrscheinlichkeitsfunktion oder der Interpolation der Kalibrierungsspektren umfasst.

7. Verfahren nach Anspruch 6, **dadurch gekennzeichnet, dass** es die nachfolgenden Schritte umfasst:

 - Interpolation (65) der Werte der Wahrscheinlichkeitsfunktion mit einer Interpolationsfunktion der Wahrscheinlichkeiten, die von zumindest einer Variablen abhängt, wobei jede Variable der Dicke eines Kalibrierungsmaterials entspricht; und
 - Suche (66) nach einem Maximalwert der Werte der Interpolationsfunktion der Wahrscheinlichkeiten, wobei
die diesem Maximalwert zugeordneten Dicken die Schätzungen der charakteristischen Dicken bilden.

8. Verfahren nach Anspruch 6 oder 7, **dadurch gekennzeichnet, dass** es die nachfolgenden Schritte umfasst:

 - Interpolation (68) der Kalibrierungsspektren mit einer Interpolationsfunktion der Spektren, die von zumindest
einer Variablen abhängt, wobei jede Variable der Dicke eines Kalibrierungsmaterials entspricht; und
 - Suche nach einem Maximalwert der Werte der Interpolationsfunktion der Spektren, wobei die diesem Maximalwert zugeordneten Dicken die Schätzungen der charakteristischen Dicken bilden.

9. Verfahren nach einem der Ansprüche 6 bis 8, **dadurch gekennzeichnet, dass** die nachfolgenden Schritte ausgeführt
werden:

 - Interpolation (65) der Werte der Wahrscheinlichkeitsfunktion mit einer Interpolationsfunktion der Wahrscheinlichkeiten, wobei die Werte Kombinationen von bekannten Dicken von Kalibrierungsmaterialien zugeordnet werden, so dass für jedes Kalibrierungsmaterial die zugeordneten Dicken in einem jeweiligen ersten Intervall liegen;

- Suche nach einem Maximalwert der Werte der Interpolationsfunktion der Wahrscheinlichkeiten, wobei die diesem Maximalwert zugeordneten Dicken angenäherte Werte ($\hat{L}'_1, \hat{L}'_2$) der Schätzungen der charakteristischen Dicken bilden;

- Interpolation (68) der Kalibrierungsspektren mit einer Interpolationsfunktion der Spektren, die von zumindest einer Variablen abhängt, wobei jede Variable der Dicke eines Kalibrierungsmaterials entspricht und Werte annimmt, die in einem jeweiligen zweiten Intervall ($[L'_{11}, L'_{12}]; [L'_{21}, L'_{22}])$) liegen, das schmäler als das erste Intervall ist, das dem gleichen Kalibrierungsmaterial zugeordnet ist, und das auf den angenäherten Wert ($\hat{L}'_1, \hat{L}'_2$) zentriert ist, der dem gleichen Kalibierungsmaterial zugeordnet ist;

- für jeden der Werte der Interpolationsfunktion der Spektren, Berechnen (62) des Werts der Wahrscheinlichkeitsfunktion und Suche (69) nach einem Maximalwert der Werte der Wahrscheinlichkeitsfunktion, wobei die diesem Maximalwert zugeordneten Dicken konsolidierte Schätzungen $(\hat{L}_1^{ech}; \hat{L}_2^{ech})$ der charakteristischen Dicken bilden.

10. Verfahren nach einem der Ansprüche 6 bis 9, **dadurch gekennzeichnet, dass** die nachfolgenden Schritte ausgeführt werden:

- Interpolation (78) der Kalibrierungsspektren mit einer Interpolationsfunktion der Spektren, wobei die Kalibrierungsspektren Kombinationen von bekannten Dicken der Kalibrierungsmaterialien zugeordnet werden, so dass für jedes Kalibrierungsmaterial die zugeordneten Dicken in einem jeweiligen ersten Intervall liegen;

- für jeden der Werte der Interpolationsfunktion der Spektren, Berechnen (72) des Werts der Wahrscheinlichkeitsfunktion und Suche (73) nach einem Maximalwert der Werte der Wahrscheinlichkeitsfunktion, wobei die diesem Maximalwert zugeordneten Dicken angenäherte Werte $(\hat{L}_1^{(2)}; \hat{L}_2^{(2)})$ der Schätzungen der charakteristischen Dicken bilden;

- Interpolation (75) der Werte der Wahrscheinlichkeitsfunktion mit einer Interpolationsfunktion der Wahrscheinlichkeiten, die von zumindest einer Variablen abhängt, wobei jede Variable der Dicke eines Kalibrierungsmaterials entspricht und Werte annimmt, die in einem jeweiligen zweiten Intervall $([L_{11}^{(2)}; L_{12}^{(2)}]; [L_{21}^{(2)}; L_{22}^{(2)}])$ liegen, das schmäler als das erste Intervall ist, das dem gleichen Kalibrierungsmaterial zugeordnet ist, und das auf den angenäherten Wert $(\hat{L}_1^{(2)}; \hat{L}_2^{(2)})$ zentriert ist, der dem gleichen Kalibrierungsmaterial zugeordnet ist; und

- Suche (73) nach einem Maximalwert der Werte der Interpolationsfunktion der Wahrscheinlichkeiten, wobei die diesem Maximalwert zugeordneten Dicken konsolidierte Schätzungen $(\hat{L}_1^{ech}; \hat{L}_2^{ech})$ der charakteristischen Dicken bilden.

11. Verfahren nach einem der Ansprüche 1 bis 10, **dadurch gekennzeichnet, dass** die Wahrscheinlichkeitsfunktion bestimmt wird aus einer statistischen Modellbildung des übertragenen Spektrums der Probe ($S^{ech}$) nach einem Poisson-Verteilung.

12. Verfahren nach einem der Ansprüche 1 bis 11, **dadurch gekennzeichnet, dass** die Wahrscheinlichkeitsfunktion, die ausgehend von dem Kalibrierungsspektrum und dem übertragenen Spektrum der Probe berechnet wird, definiert ist durch:

$$ln\left(V\left(S^{ech}, S^{base}(L_1, \ldots, L_M)\right)\right)$$

$$= C\left(-\sum_{j=1}^{R} S_j^{base}(L_1, \ldots, L_M) + \sum_{j=1}^{R} S_j^{ech} ln\left(S_j^{base}(L_1, \ldots, L_M)\right)\right)$$

wobei

*V* die Wahrscheinlichkeitsfunktion ist,
*In* der natürliche Logarithmus ist,

$$S^{ech} = \sum_{j=1}^{R} S_j^{ech}$$

das übertragene Spektrum der Probe ist, das *j* = *R* Energiekanäle ausweist,

$$S^{base}(L_1, ..., L_M) = \sum_{j=1}^{R} S_j^{base}(L_1, ..., L_M)$$

$S^{base}$ das Kalibrierungsspektrum mit *j* = *R* Energiekanäle der Kombination von M Kalibrierungsmaterialien ist, die jeweils einer jeweiligen Dicke $L_1$, ..., $L_M$ zugeordnet sind,

*C* eine Konstante ist.

13. Verfahren nach einem der Ansprüche 1 bis 12, **gekennzeichnet durch** die Verwendung zumindest eines Kalibrie-rungsspektrums ($S^{base}(L_1; L_2)$), das dem übertragenen Spektrum eines Nebenstandards entspricht, wobei dieser Nebenstandard aus einer bestimmten Dicke eines Referenzmaterials besteht und einer Kombination von bekannten Dicken von Kalibrierungsmaterialien zugeordnet ist, so dass zumindest eine Dicke einen negativen Wert annimmt.

14. Verfahren nach einem der Ansprüche 1 bis 13, **gekennzeichnet durch** einen Schritt des Herstellens einer Kalibrierungsbasis, welche die Kalibrierungsspektren ($S^{base}(L_1; L_2)$) enthält, umfassend:

- Messungen der übertragenen Spektren einer jeden aus der Mehrzahl von Stapelungen von Klötzen, wobei jeder Klotz aus einer bekannten Kalibrierungsmaterialdicke besteht;
- Messung des übertragenen Spektrums zumindest eines Kalibrierungsspektrums, der aus einer bestimmten Dicke eines Referenzmaterials besteht und einer Kombination von bekannten Dicken von Kalibrierungsmaterialien zugeordnet ist, so dass zumindest eine Dicke einen negativen Wert annimmt;
- Einstufen der gesamten Messspektren in einer einzigen Datenbank, welche ein Spektrum mit einer Kombination von Dicken der Kalibrierungsmaterialien verknüpft.

15. Vorrichtung (400) zum Charakterisieren einer Probe (402), enthaltend eine elektromagnetische Quelle (401), die in einem Röntgen- und/oder Gamma-Spektralband emittiert, und einen Detektor (403) zum Messen eines übertragenen Spektrums ($S^{ech}$) der Probe, wobei das Spektrum ($S^{ech}$) durch eine Anzahl von Photonen definiert ist, die durch die Probe (402) in jedem Kanal einer Mehrzahl von Energiekanälen übertragen werden, **dadurch gekennzeichnet, dass** sie einen Prozessor (404) enthält, der dazu angeordnet ist, das Verfahren nach einem der Ansprüche 1 bis 14 durchzuführen, sowie einen Speicher (405), der die Kalibrierungsspektren ($S^{base}(L_1; L_2)$) empfängt und mit dem Prozessor (404) verbunden ist.

**Claims**

1. A method for characterizing a sample (402), by estimating a plurality of thicknesses, named characteristic thicknesses, each being associated with a material named calibration material, comprising the following steps:

- acquiring (31; 61) an energy spectrum, named spectrum transmitted through the sample ($S^{ech}$), said spectrum being defined by a number of photons transmitted through the sample in each channel of a plurality of energy channels located in an X and/or gamma spectral band;
- for each spectrum of a plurality of energy spectra named calibration spectra ($S^{base}(L_1; L_2)$), calculating (32; 62) the value of a likelihood function from said calibration spectrum ($S^{base}(L_1; L_2)$) and from the spectrum transmitted through the sample ($S^{ech}$), each calibration spectrum ($S^{base}(L_1; L_2)$) corresponding to the spectrum transmitted through a stack of gauge blocks, each gauge block being formed of a known thickness of a calibration material;
- determining (33; 66, 69) estimations of the characteristic thicknesses $(\hat{L}_1^{ech}; \hat{L}_2^{ech})$ associated with the sample, from said values of a likelihood function and according to the criterion of maximum likelihood;

**characterised by** a calculation of the mean effective atomic number of the sample, as a function of the estimations of the characteristic thicknesses $(L_1^{ech}; L_2^{ech})$.

2. The method according to claim 1, **characterised in that** the calculation of the mean effective atomic number of the sample implements the determination of an *f* function such that:

$$Z_{eff} = f\left(\rho_1 \hat{L}_1^{ech}, \rho_2 \hat{L}_2^{ech}, \ldots, \rho_M \hat{L}_M^{ech}\right)$$

with M being the calibration materials, $\rho_i$ the density of the calibration material *i*, $\hat{L}_i^{ech}$ the estimation of the characteristic thickness associated with the calibration material *i*.

3. The method according to claim 2, **characterised in that** the *f* function is defined by:

$$f(x) = a + bx + cx^2 + dx^3, with\ x = \frac{\rho_1 \hat{L}_1^{ech}}{\rho_1 \hat{L}_1^{ech} + \rho_2 \hat{L}_2^{ech}}$$

with *a, b, c, d* real numbers.

4. The method according to claim 2, **characterised in that** the *f* function is defined by:

$$f\left(\rho_i, \hat{L}_i^{ech}\right) = \left(\frac{\sum_{i=1}^{M} \rho_i \hat{L}_i^{ech} Z_{eff,i}^p}{\sum_{i=1}^{M} \rho_i \hat{L}_i^{ech}}\right)^{1/p}$$

*p* being estimated from measurements performed on materials of known mean effective atomic number, $Z_{eff,i}$, and M>2.

5. The method according to any of claims 1 to 4, **characterised in that** determining (33; 66, 69) the estimations of the characteristic thicknesses $\left(L_1^{ech}; L_2^{ech}\right)$ associated with the sample, comprises searching for a maximum of the values of the likelihood function, the thicknesses associated with this maximum forming the estimations $\left(\hat{L}_1^{ech}; \hat{L}_2^{ech}\right)$ of the characteristic thicknesses $\left(L_1^{ech}; L_2^{ech}\right)$.

6. The method according to any of claims 1 to 5, **characterised in that** it comprises at least one step of interpolating values of the likelihood function or of interpolating calibration spectra.

7. The method according to claim 6, **characterised in that** it comprises the following steps:

   - interpolating (65) values of the likelihood function by a likelihood interpolation function depending on at least one variable, each variable corresponding to the thickness of a calibration material; and
   - searching (66) for a maximum of the values of said likelihood interpolation function, the thicknesses associated with this maximum forming the estimations of the characteristic thicknesses.

8. The method according to claim 6 or 7, **characterised in that** it comprises the following steps:

   - interpolating (68) the calibration spectra by a spectrum interpolation function depending on at least one variable, each variable corresponding to the thickness of a calibration material; and
   - searching for a maximum of the values of said spectrum interpolation function, the thicknesses associated with this maximum forming the estimations of the characteristic thicknesses.

9. The method according to any of claims 6 to 8, **characterised in that** the following steps are implemented:

   - interpolating (65) the values of the likelihood function by a likelihood interpolation function, said values being associated with combinations of known thicknesses of calibration materials such that for each calibration material, the associated thicknesses are located within a first respective interval;

- searching for a maximum of the values of said likelihood interpolation function, the thicknesses associated with this maximum forming approximate values ($\hat{L}'_1$, $\hat{L}'_2$) of the estimations of the characteristic thicknesses;
- interpolating (68) the calibration spectra by a spectrum interpolation function depending on at least one variable, each variable corresponding to the thickness of a calibration material and taking values located within a second respective interval ($[L'_{11}, L'_{12}]$; $[L'_{21}, L'_{22}]$), narrower than the first interval associated with the same calibration material and centred on the approximate value ($\hat{L}'_1$, $\hat{L}'_2$) associated with the same calibration material;
- for each of the values of said spectrum interpolation function, calculating (62) the value of the likelihood function and searching (69) for a maximum of said values of the likelihood function, the thicknesses associated with this maximum forming consolidated estimations $(\hat{L}_1^{ech}; \hat{L}_2^{ech})$ of the characteristic thicknesses.

**10.** The method according to any of claims 6 to 9, **characterised in that** the following steps are implemented:

- interpolating (78) the calibration spectra by a spectrum interpolation function, said calibration spectra being associated with combinations of known thicknesses of calibration materials such that for each calibration material, the associated thicknesses are located within a first respective interval;
- for each of the values of said spectrum interpolation function, calculating (72) the value of the likelihood function and searching (73) for a maximum of said values of the likelihood function, the thicknesses associated with this maximum forming approximate values $(\hat{L}_1^{(2)}, \hat{L}_2^{(2)})$ of the estimations of the characteristic thicknesses;
- interpolating (75) the values of the likelihood function by a likelihood interpolation function depending on at least one variable, each variable corresponding to the thickness of a calibration material and taking values located within a second respective interval $([L_{11}^{(2)}; L_{12}^{(2)}]; [L_{21}^{(2)}; L_{22}^{(2)}])$, narrower than the first interval associated with the same calibration material and centred on the approximate value $(\hat{L}_1^{(2)}, \hat{L}_2^{(2)})$ associated with the same calibration material; and
- searching (73) for a maximum of the values of said likelihood interpolation function, the thicknesses associated with this maximum forming consolidated estimations $(\hat{L}_1^{ech}; \hat{L}_2^{ech})$ of the characteristic thicknesses.

**11.** The method according to any of claims 1 to 10, **characterised in that** the likelihood function is determined from a statistical modelling of the spectrum transmitted through the sample ($S^{ech}$), according to Poisson distribution.

**12.** The method according to any of claims 1 to 11, **characterised in that** the likelihood function calculated from said calibration spectrum and from the spectrum transmitted through the sample, is defined by:

$$ln\left(V\left(S^{ech}, S^{base}(L_1, \ldots, L_M)\right)\right)$$

$$= C\left(-\sum_{j=1}^{R} S_j^{base}(L_1, \ldots, L_M) + \sum_{j=1}^{R} S_j^{ech} ln\left(S_j^{base}(L_1, \ldots, L_M)\right)\right)$$

$V$ is the likelihood function,
$ln$ is the naperian logarithm,
$S^{ech} = \sum_{j=1}^{R} S_j^{ech}$ $S^{ech}$ is the spectrum transmitted through the sample, presenting $j = R$ energy channels,
$S^{base}(L_1, \ldots, L_M) = \sum_{j=1}^{R} S_j^{base}(L_1, \ldots, L_M)$ $S^{base}$ is the calibration spectrum with $j = R$ energy channels of the combination of $M$ calibration materials each associated with a respective thickness $L_1, \ldots, L_M$,
$C$ is a constant.

**13.** The method according to any of claims 1 to 12, **characterised by** using at least one calibration spectrum ($S^{base}(L_1$;

$L_2$)) corresponding to the spectrum transmitted through an additional standard, this additional standard consisting of a determined thickness of a reference material, and being associated with a combination of known thicknesses of calibration materials such that at least one thickness takes a negative value.

14. The method according to any of claims 1 to 13, **characterised by** a step of manufacturing a calibration basis comprising said calibration spectra ($S^{base}(L_1; L_2)$), comprising:

- measurements of the spectra transmitted through each of a plurality of stacks of gauge blocks, each gauge block consisting of a known thickness of a calibration material;
- a measurement of the spectrum transmitted through at least one additional standard consisting of a determining thickness of a reference material, and associated with a combination of known thicknesses of the calibration materials such that at least one thickness takes a negative value;
- ranking of all the measured spectra into a single database connecting a spectrum to a combination of thicknesses of the calibration materials.

15. A device (400) for characterizing a sample (402), comprising an electromagnetic source (401) emitting into an X and/or gamma spectral band, and a detector (403) for measuring a spectrum ($S^{ech}$) transmitted through the sample, said spectrum ($S^{ech}$) being defined by a number of photons transmitted through the sample (402) in each channel of a plurality of energy channels, **characterised in that** it comprises a processor (404), configured to implement the method according to any of claims 1 to 14, and a memory (405) receiving the calibration spectra ($S^{base}(L_1; L_2)$), and connected to the processor (404).

FIG.1

FIG.2

**FIG.3**

```
                    ┌──────────────┐
                    │      31      │
                    └──────┬───────┘
                           │
                           ▼
        ╭─────────╮    ╭────────────────╮
        │  S^ech  │    │ S^base(L_1,L_2)│
        ╰────┬────╯    ╰────────┬───────╯
             └──────────┬───────┘
                        ▼
                ┌──────────────┐
                │      32      │
                └──────┬───────┘
                       ▼
                ┌──────────────┐
                │      33      │
                └──────┬───────┘
                       ▼
                 ╭──────────╮
                 │ L̂_1^ech, │
                 │  L̂_2^ech │
                 ╰──────────╯
```

**FIG.4**

FIG.5

$S^{base}(L_1, L_2)$

61

$S^{ech}$

62

65

66

69

$\hat{L}'_1, \hat{L}'_2$

$\hat{L}_1^{ech}, \hat{L}_2^{ech}$

$S'^{base}(L_1, L_2)$

67

$[L'_{11}; L'_{12}]$
$[L'_{21}; L'_{22}]$

68

FIG.6

$$S^{base}(L_1, L_2)$$

$$78$$

$$71$$

$$S''^{base}(L_1, L_2)$$

$$S^{ech}$$

$$72$$

$$73$$

$$\hat{L}^{(2)}_1 ; \hat{L}^{(2)}_2$$

$$\hat{L}^{ech}_1 ; \hat{L}^{ech}_2$$

$$77$$

FIG. 7

$$[L^{(2)}_{11} ; L^{(2)}_{12}]$$
$$[L^{(2)}_{21} ; L^{(2)}_{22}]$$

$$75$$

FIG.8

## RÉFÉRENCES CITÉES DANS LA DESCRIPTION

**Documents brevets cités dans la description**

- US 8929508 B
- US 20100202584 A1

**Littérature non-brevet citée dans la description**

- **ALEXANDRA-LULIA POTOP.** Imagerie par rayons X résolue en énergie : méthodes de décomposition en base de matériaux adaptées à des détecteurs spectrométriques. INSA Lyon, 02 Octobre 2014
- **ZHANG, RUOQIAO et al.** Model-Based Iterative Reconstruction for Dual-Energy X-Ray CT Using a Joint Quadratic Likelihood Model. *IEEE Transactions on Médical Imaging,* 2014, vol. 33 (1